# EUROPÄISCHE PATENTSCHRIFT

(11) **EP 3 256 877 B1**
(45) Veröffentlichungstag und Bekanntmachung des Hinweises auf die Patenterteilung: **03.04.2019**
(21) Anmeldenummer: 16704252.2
(22) Anmeldetag: 15.02.2016
(51) Int. Cl.: G01S 7/497, G01S 17/02, G01S 17/42, G01S 7/48, G01S 17/89

(54) **LASERSCANNER UND VERFAHREN ZUM VERMESSEN EINES OBJEKTES**
LASER SCANNER AND METHOD FOR MEASURING AN OBJECT
DISPOSITIF DE BALAYAGE LASER ET PROCÉDÉ DE MESURE D'UN OBJET

(30) Priorität: 13.02.2015 DE 102015102128; 13.08.2015 DE 102015113381
(43) Veröffentlichungstag der Anmeldung: 20.12.2017
(73) Patentinhaber: Zoller & Fröhlich GmbH, 88239 Wangen im Allgäu (DE)
(72) Erfinder: FRÖHLICH, Christoph, 88239 Wangen (DE); METTENLEITER, Markus, 88316 Isny (DE)
(74) Vertreter: Winter, Brandl, Fürniss, Hübner, Röss, Kaiser, Polte - Partnerschaft mbB
(86) Internationale Anmeldenummer: PCT/EP2016/053145
(87) Internationale Veröffentlichungsnummer: WO 2016/128575

(56) Entgegenhaltungen:
- DE-A1-102013 102 286
- DE-B3-102009 035 336
- US-A1- 2006 006 309
- KATZ R ET AL: "Integrated Sensing Framework for 3D Mapping in Outdoor Navigation", INTELLIGENT ROBOTS AND SYSTEMS, 2006 IEEE/RSJ INTERNATIONAL CONFERENCE ON, IEEE, PI, 1. Oktober 2006 (2006-10-01), Seiten 2264-2269, XP031006431, ISBN: 978-1-4244-0258-8

## Beschreibung

Die Erfindung betrifft einen Laserscanner gemäß dem Oberbegriff des Patentanspruchs 1 und ein Verfahren zum Vermessen eines Objektes mittels eines derartigen Scanners.

Die 3D-Vermessung von Objekten mit Hilfe von Laserscannern gewinnt in der Praxis zunehmend an Bedeutung. Bei komplexen oder schwierig zugänglichen Objekten werden stets mehrere Laserscans nacheinander von unterschiedlichen Standorten aufgenommen und in einem gemeinsamen Projektordner abgespeichert, die dann in ein gemeinsames übergeordnetes Koordinatensystem überführt werden müssen. Dieser Prozess wird als "Registrierung" bezeichnet. Zur Berechnung der Transformationen der einzelnen Standorte in das übergeordnete Koordinatensystem ist es erforderlich, einzelne, im übergeordneten System bekannte Punkte in den jeweiligen Scans zu finden und über deren Lage eine Transformation zu errechnen, die dann auf die gesamte Punktwolke angewendet wird.

Die Lage der gesuchten Punkte im Scan muss des Weiteren sehr genau bekannt sein, da sich sonst die Transformation nicht korrekt berechnen lässt und die Lage der verschiedenen Laserscans, sowohl zueinander als auch zum übergeordneten Koordinatensystem, nur mit geringer Genauigkeit gegeben sind. Aus diesem Grund werden bisher - wie in der DE 10 2008 034 198 B4 der Anmelderin beschrieben - in der zu vermessenden Umgebung eine Vielzahl von Targets aufgebracht, auf denen eine Kennzeichnung, beispielsweise eine laufende Nummer zu Identifikation aufgedruckt ist, die bei der Auswertung manuell erfasst wird. Zur Qualitätssicherung sollten alle Targets mit einer sogenannten "Totalstation" tachymetrisch eingemessen und notiert werden - dieser Vorgang ist mit zusätzlichem Messaufwand verbunden und bedarf zusätzlichen messtechnischen Fachwissens.

Zur Verringerung dieses Aufwandes kann auch eine targetlose Registrierung der dreidimensionalen Punktwolken erfolgen. Dabei erfolgt die Registrierung weitestgehend automatisch anhand der Informationen aus den Objektmesspunkten. Dabei ist es jedoch erforderlich, dass das Objekt gewisse Besonderheiten aufweist, die eine eindeutige automatische Zuordnung der einzelnen Scans ermöglichen. Allerdings weisen reale Umgebungen oft Mehrdeutigkeiten (z.B. Säulen in immer gleichen Abständen in einer Produktions-Halle oder immer gleiche Türen in Bürofluren) auf, die zu fehlerhaften Zuordnungen führen können. Auch kann bei oftmals mehreren Hundert aufgenommenen Laserscans aufgrund der damit verbundenen exponentiellen Rechenzeitzunahme zum Zwecke der automatischen Registrierung nicht jeder Scan mit jedem weiteren Scan verglichen werden.

Nur auf den vorhergehenden Scan zu registrieren ist nicht immer praktikabel, etwa wenn dieser hinter einer Abschattung liegt. Aus diesen Gründen ist eine gewisse Vor-Orientierung (Position und Ausrichtung) der zu registrierenden Scans meist unabdingbar, was bislang manuell durch "Verdrehen" / "Verschieben" des Standortes im elektronischen Feldbuch erfolgte.

Für eine automatische Registrierung muss jedoch auch diese Vor-Orientierung automatisch erfolgen, wozu eine Schätzung des aktuellen Standortes aus Sensor-Daten benötigt wird.

Bekannt ist es, zur automatischen Registrierung die einzelnen Positionen der Standorte des Laserscanners beim Scannen mittels eines GNSS (Global Navigation Satellite System) - im Folgenden als GPS-System bezeichnet - zu erfassen. Dies ist allerdings nur bei Outdoor-Vermessung möglich, wobei eine hinreichende GPS-Qualität vorhanden sein muss, um die erforderliche Genauigkeit zu erzielen. Bei Indoor-Vermessungen ist die Erfassung der Scannerposition mittels GPS-Systemen mit großen Fehlern behaftet oder unmöglich. Außerdem enthalten GPS Daten keine Information zur Orientierung des Laserscanners.

In der DE 20 2010 013 825 U1 ist ein Laserscanner zur 3D-Vermessung von Objekten gezeigt, bei der ein Laserstrahl mittels eines Strahlablenkungssystems auf das jeweils zu vermessende Objekt gerichtet wird und der von diesem reflektierte Messstrahl über eine Auswerteeinheit ausgewertet wird.

Die DE 10 2013 102 286 A1 offenbart einen Laserscanner, der mit einem GPS-System oder einer MEMS-IMU ausgeführt seien kann. Der Laserscanner hat eine Navigationseinrichtung zum Erfassen der Scannerposition, so dass es möglich ist, von unterschiedlichen Standorten aus aufgenommene Scans (Punktewolken) in einem übergeordneten Koordinatensystem zu registrieren.

Problematisch dabei ist, dass der jeweilige Standort mit Hilfe der Navigationseinrichtung nur grob geschätzt oder erfasst werden kann, so dass die Mitkoppelgenauigkeit, d. h., die über die Navigationseinheit ermittelten Standorte und die auf der Basis dieser Standorte erfolgte Registrierung ungenau sein können.

Dem gegenüber liegt der Erfindung die Aufgabe zugrunde, einen Laserscanner und ein Verfahren zu schaffen, die ein genaueres Vermessen von Objekten mit geringem Aufwand und weitgehend vollautomatisch ermöglichen.

Diese Aufgabe wird im Hinblick durch den Laserscanner durch die Merkmalskombination des Patentanspruchs 1 und im Hinblick auf das Verfahren durch die Merkmale des nebengeordneten Patentanspruchs 6 gelöst.

Vorteilhafte Weiterbildungen der Erfindung sind Gegenstand der Unteransprüche.

Erfindungsgemäß hat der Laserscanner zur 3D-Vermessung von Objekten einen Sender zum Abgeben eines Laserstrahls, ein mechanisches Strahlablenkungssystem zum Ablenken des Laserstrahls derart, dass eine 3D-Objektvermessung ermöglicht ist und mit einer Auswerteeinheit zum Auswerten des vom Objekt reflektierten Messstrahls. Der Laserscanner ist des Weiteren mit einer Navigationseinrichtung zum Erfassen der Scannerposition ausgerüstet. Die Navigationseinrichtung hat eine Navigationseinheit zur GNSS-/GPS-Signal-unabhängigen Bestimmung der Scannerposition und -orientierung mit Bezug zu einer Scanner-Grundposition. Erfindungsgemäß wird die über die Navigationseinheit geschätzte Scannerposition (Standort) nach der Registrierung des jeweiligen Scans und der daraus resultierenden genaueren Erfassung des Standorts präzisiert/korrigiert, so dass das Mitkoppeln der einzelnen Scannerpositionen bei einer Vermessung eines komplexen Objektes über die Navigationseinheit deutlich genauer als beim Stand der Technik erfolgt, bei dem kein "Update"/Kalibrierung der Position der Navigationseinheit durchgeführt wird.

Eine derartige Navigationseinheit ermöglicht eine hinreichende Bestimmung der jeweiligen Scannerpositionen mit Bezug zu einer Grundposition, so dass entsprechend auch die Positionen des Laserscanners beim Scannen des Objektes von unterschiedlichen Standorten aus relativ zueinander bekannt sind und auf der Basis dieser Werte eine automatische Registrierung mit hinreichender Genauigkeit ermöglicht ist.

Über die Navigationseinheit wird somit auch bei fehlendem GNSS-/GPS-Empfang oder Fehlen eines sonstigen für die Navigation/Standorterkennung nutzbaren Signals eine Positionsänderung des Scanners von einem zum nächsten Standort relativ mitgekoppelt, so dass dieser mit hinreichender Genauigkeit bestimmt ist. Dieser mitgekoppelte (geschätzte) Standort wird dann mit Hilfe des über die Registrierung ermittelten Standorts korrigiert und somit die Navigationseinheit sozusagen kalibriert, so dass der im nächsten Schritt gewählte Standort mit größerer Genauigkeit erfasst werden kann.

Die Messgenauigkeit lässt sich noch weiter erhöhen, wenn die Navigationseinheit mit einem Barometer, Kompass und/oder einem GNSS-/GPS-Empfänger ausgeführt ist, so dass entsprechend auch die Höhe des Scanners bekannt ist bzw. die Messgenauigkeit bei vorhandenen GNSS-/GPS-Signalen verbessert werden kann. Verwendbar sind auch sonstige Zusatzgeräte zur Standortschätzung, wie etwa bekannte WLAN Standorte (RSS Auswertung) oder Laufzeitauswertung in GSM oder LTE Netzen (Handy) oder über Bluetooth-Beacons oder UWB Systeme oder Photogrammetrie oder Odeometrie.

Der Laserscanner kann mit einer internen oder externen Auswerteeinheit zur targetlosen Registrierung mehrerer Scans in Abhängigkeit von der jeweiligen Laserposition und Laserorientierung ausgeführt sein.

Die weitestgehend automatisierte Auswertung der Scans ist vereinfacht, wenn der Scanner mit einem Speicher zum Speichern der von der Navigationseinheit ermittelten Standortdaten ausgeführt ist.

Das erfindungsgemäße Verfahren zum Vermessen eines Objektes mittels eines derartigen Scanners beinhaltet unter Anderem einen Schritt zur Bestimmung einer Start- oder Grundposition des Scanners mittels der Navigationseinheit, von der aus der erste Scan durchgeführt wird. In einem weiteren Schritt wird dann dieser erste Scan erstellt und auf der Basis der Grundposition erfolgt eine Registrierung des Scans in einem übergeordneten Koordinatensystem, etwa durch in diesem Scan sichtbare, bereits eingemessene Targets oder andere Objekte mit bekannter Position. Falls ein übergeordnetes Koordinatensystem nicht erforderlich sein sollte, kann die erste Position auch einfach auf den Nullpunkt [0,0,0] des relativen Koordinatensystems gesetzt werden. Die Standposition des Scanners wird dann als Startposition für das Versetzen des Laserscanners zum nächsten Standort verwendet, wobei die Relativbewegung des Scanners mittels der Navigationseinheit mitgekoppelt wird, so dass der nächste Standort relativ zum vorherigen geschätzt werden kann. Die Position wird dann durch eine Target-lose oder auch Target-basierte Registrierung mit höherer Genauigkeit bestimmt und - wie vorstehend ausgeführt - der über die Navigationseinheit erfasste Standort entsprechend korrigiert. Dieses Verfahren wiederholt sich dann so lange, bis das Objekt vollständig vermessen ist. Die dabei resultierenden Scans sind mit vergleichsweise großer Genauigkeit und keinen bzw. nur minimalen manuellen Eingriffen in einem gemeinsamen Koordinatensystem registriert, so dass die anschließende Auswertung der Scans sehr einfach und unter Umständen bereits vor Ort erfolgen kann.

Auf der Basis der Registrierung eines Scans erfolgt eine Korrektur der Schätzung des vorausgegangenen Scans durch das Transformationsergebnis der Registrierung, wobei vorzugsweise die Navigationseinheit entsprechend korrigiert wird.

Die Grundposition des ersten Scans kann bei einem Verfahren mittels GNSS-Daten oder vorhandener Objekte oder Targets mit bereits bekannten Koordinaten durchgeführt werden.

Die Erfindung wird im Folgenden anhand schematischer Zeichnungen näher erläutert. Es zeigen:
Figur 1 eine Schemadarstellung eines erfindungsgemäßen Laserscanners;
Figur 2 eine Prinzipdarstellung der Vermessung eines Objektes durch Aufnahme mehrerer Scans und
Figur 3 einen stark vereinfachten Ablauf für eine Registrierung der aufgenommenen Scans in einem übergeordneten Koordinatensystem.

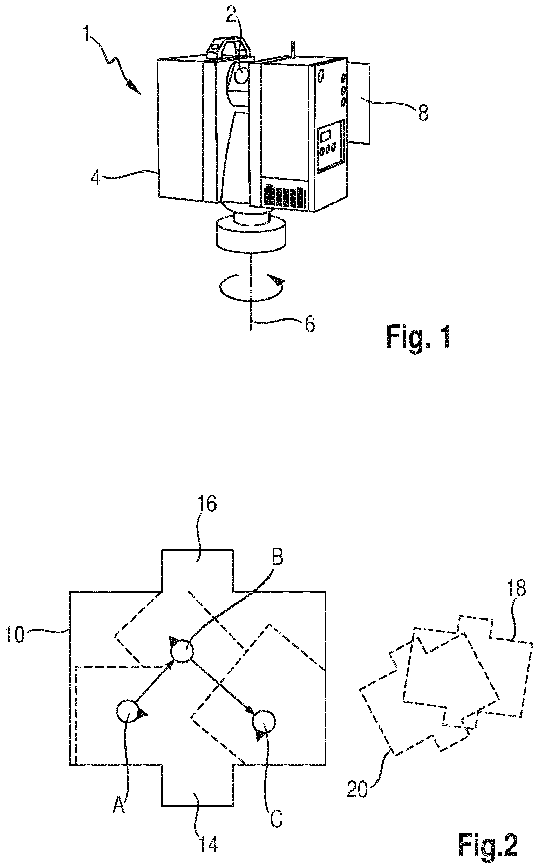

Figur 1 zeigt eine Prinzipdarstellung eines erfindungsgemäßen Laserscanners 1, dessen prinzipieller Grundaufbau dem von der Anmelderin vertriebenen Laserscanner "Imager®" entspricht. Weitere Einzelheiten eines derartigen Laserscanners sind beispielsweise in der DE 101 50 436 B4 oder der DE 10 2006 024 534 A1 beschrieben. Ein derartiger Laserscanner 1 hat einen rotierenden Messkopf 2, der um eine Horizontalachse (Ansicht nach Figur 1) rotiert und über den ein Laserstrahl auf ein zu vermessendes Objekt gerichtet wird. Die eingangs erläuterte Sende- und Empfangseinheit des Laserscanners 1 ist in einem Gehäuse 4 angeordnet, das um eine Vertikalachse 6 verschwenkbar ist. Das zu vermessende Objekt kann nahezu vollständig durch Verschwenken des Gehäuses 4 um 180° und dabei rotierenden Messkopf 2 abgetastet werden, wobei der unterhalb des Messkopfs befindliche, durch das Gehäuse abgedeckte Bereich nicht erfassbar ist. Hinsichtlich weiterer Einzelheiten sei auf die vorgenannte Druckschrift verwiesen.

Zur Vereinfachung der Registrierung ist der Laserscanner 1 mit einer Navigationseinheit 8 ausgeführt, bevorzugt einem preiswerten MEMS (Micro Electronic Mechanical System) Typ. Diese weist Accelerometer, Gyroskope, Barometer, Magnetometer und einen herkömmlichen GNSS (z.B.GPS)-Empfänger auf. Über die erstgenannten Komponenten kann unabhängig von der Verfügbarkeit eines GNSS-Signals die Orientierung und Relativposition des Laserscanners mit Bezug zu einer bekannten Ausgangs- oder Grundposition erfasst werden.

D. h., über diese Komponenten kann eine Positionsänderung des Laserscanners 1 mit Bezug zur ursprünglichen Grundposition mitgekoppelt werden, so dass der nachfolgende Standort mit ausreichender Genauigkeit geschätzt werden kann. Eine hohe Genauigkeit ist nicht erforderlich, da nicht der exakte Scanner- Standort (1 Millimeter Genauigkeit) bestimmt werden muss, sondern lediglich ein grober Schätzwert (1-2m Genauigkeit), der als Startwert für die automatische Registrierung dient. Der Laserscanner 1 ist des Weiteren mit einem Speicher für die über die Navigationseinheit erfassten Positionsdaten ausgeführt. Der auf der Basis der Registrierung ermittelte genaue Standort wird dann zur Korrektur/Kalibrierung der Navigationseinheit verwendet.

Figur 2 zeigt in stark vereinfachter Weise die Vermessung eines Raums 10 mittels eines derartigen Laserscanners 1. Dieser Raum 10 sei beispielsweise mit charakteristischen Abschnitten, beispielsweise erkerförmigen Vorsprüngen 14, 16 ausgeführt. Ein derartiger Raum, der noch mit mehreren Trennwänden versehen sein kann, kann üblicherweise nicht durch einen einzigen Scan erfasst werden. Dem entsprechend sind mehrere, im vorliegenden Fall drei Scans aus unterschiedlichen Positionen aufzunehmen. Da es sich um einen Innenraum handelt, ist ein GPS-Signal nicht verfügbar.

Es sei angenommen, dass ein erster Standort A des Laserscanners 1 entweder in einem bestehenden Koordinatensystem bekannt ist oder zunächst der Einfachheit halber die relativen Koordinaten [0,0,0] zugewiesen bekommt. Angedeutet mit dem schwarzen Pfeil ist die Orientierung des Laserscanners (lokales Koordinatensystem). Es erfolgt eine erste Messung (Aufnahme einer 3D Punktwolke) vom Standort A aus.

Der Laserscanner 1 wird dann zum Standort B verbracht, wobei die Positionsänderung des Laserscanners 1 über die Navigationseinheit 8 mitgekoppelt wird, so dass der Standort B, an dem der Laserscan B aufgenommen wird, in Position und Orientierung des Laserscanners mit ausreichender Genauigkeit mit Bezug zum Standort A geschätzt werden kann. Diese Schätzung dient der Registrierungs-Software als Startwert zur automatischen, targetlosen Registrierung von Scan B auf Scan A. Nach der Registrierung ist die relative Position von Standort B zu Standort A mit sehr hoher Genauigkeit bekannt. Dies wird dazu benutzt, den Standort B (der ja zuvor nur geschätzt war) exakt zu berechnen. Dieses Ergebnis wird an das Navigations-System im Laserscanner zurück übertragen, so dass dieses den exakten Standort B ebenfalls kennt. Es erfolgt sozusagen ein Update des mittels des Navigationssystems ermittelten Standorts.

In einem folgenden Schritt wird dann der Laserscanner 1 vom Standort B zum Standort C verbracht und diese Positionsänderung wiederum über die Navigationseinheit 8 mitgekoppelt, so dass die Relativposition des Standorts C mit Bezug zum Standort B (und damit zur Grundposition (Standort A)) geschätzt werden kann. Der anschließende Vorgang entspricht dem unter Standort B beschriebenen. Auch in diesem Schritt erfolgt unter anderem die Korrektur des mit dem Navigationssystem ermittelten Standorts auf der Basis des über die Registrierung bestimmten Standorts.

Dabei bedarf es keiner oder lediglich minimaler manueller Eingriffe, um die Registrierung vorzunehmen. In gleicher Weise lassen sich auch eine Vielzahl weiterer Scans von unterschiedlichen Standorten aufnehmen, wobei die jeweiligen Positionen stets durch das Navigationssystem ausgehend von der Grundposition A oder dem letzten Standort mitgekoppelt werden - die automatische Registrierung ist somit auch bei komplexen Objekten mit einer Vielzahl von Scans ohne Weiteres möglich. Die Korrektur des Navigationssystems erfolgt dabei mit den über die Registrierung ermittelten Daten.

In Figur 2 rechts ist die Schwierigkeit der herkömmlichen Vorgehensweise angedeutet. Dargestellt sind zwei Scans (18 / 20), die von zwei unterschiedlichen Standorten aus aufgenommen wurden. Diese beiden Scans sind zunächst in ihrem lokalen Koordinatensystem abgelegt. Eine targetlose automatische Registrierung ist hier nicht ohne weiteres möglich, da die Szene wegen der spiegelbildlich angeordneten Ausbuchtungen (14 / 16) eine Mehrdeutigkeit aufweist - beide Scans könnten auch 180° verdreht zueinander registriert werden. Der Anwender muss deshalb eine manuelle Vororientierung vornehmen und außerdem den Drehwinkelbereich der Registrierung einschränken, um zu verhindern, dass diese die falsche Lösung findet.

Bei der neuen Vorgehensweise ist jedoch Dank der automatischen Schätzung der relativen Änderung der Position / Orientierung zwischen den Standorten der Scans 18 / 20 durch das Navigations-System ein ausreichend guter Startwert für die korrekte Zuordnung durch die automatische targetlose Registrierung vorhanden. Es wird somit ohne manuellen Eingriff die korrekte Registrierung gefunden.

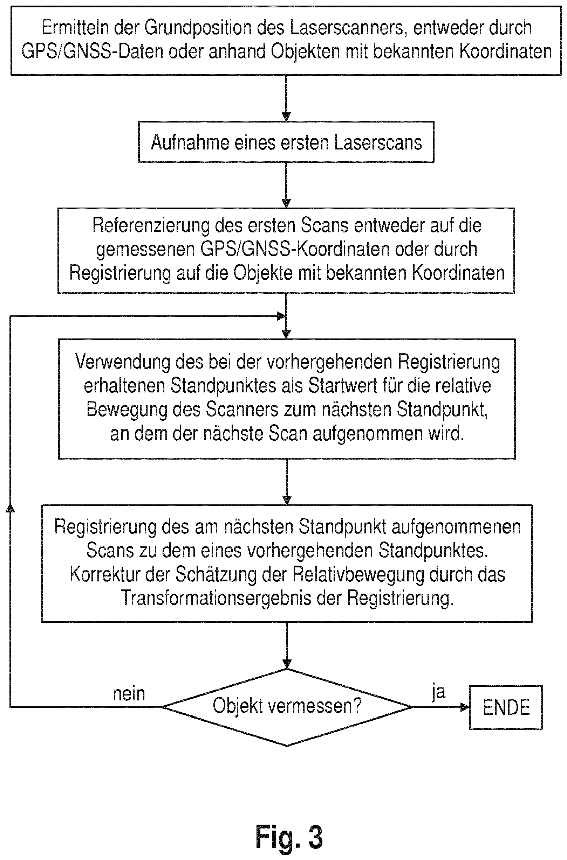

In Figur 3 sind nochmals wesentliche Elemente des erfindungsgemäßen Messverfahrens dargestellt. Dem entsprechend erfolgt zunächst die Ermittlung der Grundposition des Laserscanners 1 für eine erste Messung. Ausgehend von dieser Grundposition (Standort A) erfolgt die Aufnahme des ersten Scans. Anhand der Objekte oder Targets mit bekannten Koordinaten im ersten Scan kann dieser (und damit die Grundposition) in ein übergeordnetes Koordinatensystem registriert werden. Die dabei erhaltene Grundposition (Standort A) wird dann als Referenz für die Bestimmung des neuen Standorts B verwendet, von dem aus ein weiterer Scan aufgenommen wird. Da die Relativposition dieses neuen Standorts B mit Bezug zum Standort A über die Navigationseinheit 10 erfasst ist, kann auch dieser zweite Scan im übergeordneten Koordinatensystem registriert werden. Die Navigationseinheit bzw. der mit dieser bestimmte geschätzte Standort wird dann auf der Basis des über die Registrierung erfassten Standorts korrigiert.

In entsprechender Weise erfolgt dann die Aufnahme weiterer Scans, bis das Objekt vollständig vermessen ist - die einzelnen Scans sind dann nach Art eines Feldbuchs im übergeordneten Koordinatensystem registriert.

Die in MEMS-Bauweise ausgeführte Navigationseinheit 10 weist zwar üblicher Weise eine nicht unerhebliche Drift auf, diese spielt jedoch keine wesentliche Rolle, da der "Track", d. h., die Veränderung des Scannerstandorts nicht über eine lange Zeit oder einen großen Weg aufgenommen werden muss und sich der Scanner während des Scannens nicht von seinem Standort weg bewegt bzw. seine Bewegung (Rotation um die Hochachse) bekannt ist.

Das erfindungsgemäße Verfahren und der erfindungsgemäße Laserscanner ermöglichen somit ein sehr präzises schnelles Vermessen von Objekten ohne nennenswerte manuelle Eingriffe beim Registrieren. Die Vermessung ist dabei auch unabhängig von GPS-Signalen durchführbar, wobei unter Umständen die Messgenauigkeit durch einen GPS-Empfänger weiter verbessert werden kann.

Offenbart ist ein Laserscanner, der mit einer GPS-Signal-unabhängigen Navigationseinheit ausgeführt ist.

### Bezugszeichenliste:

- 1: Laserscanner
- 2: Messkopf
- 4: Gehäuse
- 6: Vertikalachse
- 8: Navigationseinheit (im Scanner integriert)
- 10: Objekt (Raum) in Draufsicht
- 14: Ausbuchtung #1
- 16: Ausbuchtung #2
- 18: Scan von einem ersten Standort
- 20: Scan von einem zweiten Standort

## Patentansprüche

1. Laserscanner zur 3D-Vermessung von Objekten, mit einem Sender zum Abgeben eines Laserstrahls, einem mechanischen Strahlablenkungssystem zum Ablenken des Laserstrahls derart, dass eine 3D-Objektvermessung ermöglicht ist, mit einer Auswerteeinheit zum Auswerten des vom Objekt reflektierten Messstrahls und mit einer Navigationseinrichtung zum Erfassen der Scannerposition im Raum, wobei die Navigationseinrichtung eine Navigationseinheit (8) zum GNSS-, insbesondere GPS-, Signal-unabhängigen Bestimmen der Scannerposition und Scannerorientierung mit Bezug zu einer Grundposition (A) des Laserscanners (1) hat, wobei die Auswerteeinheit ausgelegt ist, eine mittels der Navigationseinrichtung geschätzte Scannerposition auf der Basis einer automatischen Registrierung eines Scans auf die Objekte zu korrigieren und eine entsprechende Korrektur der Navigationseinheit durchzuführen.

2. Laserscanner nach Patentanspruch 1, wobei die Navigationseinheit (8) Accelerometer, Gyroskope und Magnetometer enthält.

3. Laserscanner nach Patentanspruch 2, mit einem Barometer und/oder einem GNSS-Empfänger und/oder anderen geeigneten Zusatzgeräten zur Standort-Schätzung.

4. Laserscanner nach einem der vorhergehenden Patentansprüche, mit einer Auswerteeinheit zum automatischen, targetlosen Registrieren mehrerer Scans in Abhängigkeit von der jeweiligen Scannerposition und Scannerorientierung.

5. Laserscanner nach einem der vorhergehenden Patentansprüche, mit einem Speicher zum Speichern der von der Navigationseinheit ermittelten Daten.

6. Verfahren zum Vermessen eines Objektes mittels eines Laserscanners nach einem der vorhergehenden Patentansprüche mit den Schritten:
a) Bestimmen einer Grundposition des Laserscanners mittels der Navigationseinheit (8) oder Setzen der Grundposition auf [0,0,0].
b) Erstellen eines ersten Scans (18).
c) Registrierung dieses Scans (18) auf die Objekte mit bekannten Koordinaten, wodurch dieser in einem übergeordneten Koordinatensystem vorliegt.
d) Verwendung des bei einer vorhergehenden Registrierung erhaltenen Standortes als Startposition für die Ermittlung eines Schätzwerts der relativen Bewegung des Scanners zum nächsten Standort (B, C), an dem der nächste Scan (20) aufgenommen werden soll.
e) Automatische Registrierung des am nächsten Standort aufgenommenen Scans (20) relativ zu dem Scan (18) eines vorhergehenden Standortes.
f) Wiederholen der Schritte d) und e) bis das Objekt vermessen ist, wobei auf der Basis der automatischen Registrierung eine Korrektur des mittels der Navigationseinheit (8) ermittelten Schätzwerts und eine Korrektur der Navigationseinheit erfolgt.

7. Verfahren nach Patentanspruch 6 , wobei das Bestimmen der Grundposition mittels GNSS- oder GPS-Daten oder anhand vorhandener Objekte mit bereits bekannten Koordinaten durchgeführt wird.

## Claims

1. A laser scanner for 3D survey of objects, comprising an emitter for emitting a laser beam, a mechanical beam deflecting system for deflecting the laser beam such that a 3D object survey is possible, an evaluation unit for evaluating the survey beam reflected by the object, and a navigation device for detecting the scanner position in the space, wherein the navigation device has a navigation unit (8) for GNSS, especially GPS signal-independent determination of the scanner position and scanner orientation with respect to a basic position (A) of the laser scanner (1), wherein the evaluation unit is adapted to correct a scanner position estimated by means of the navigation device on the basis of an automatic recording of a scan to the objects and to perform a corresponding correction of the navigation unit.

2. The laser scanner according to claim 1, wherein the navigation unit (8) comprises accelerometers, gyroscopes, and magnetometers.

3. The laser scanner according to claim 2, comprising a barometer and/or a GNSS receiver, and/or other suitable auxiliary means for location estimation.

4. The laser scanner according to any of the preceding claims, comprising an evaluation unit for the automatic, targetless recording of a plurality of scans as a function of the respective scanner position and scanner orientation.

5. The laser scanner according to any of the preceding claims, comprising a memory for storing the data determined by the navigation unit.

6. A method for surveying an object by means of a laser scanner in accordance with any of the preceding claims, comprising the steps of:
a) Determining a basic position of the laser scanner via the navigation unit (8) or setting the basic position to [0,0,0].
b) Making a first scan (18).
c) Recording said scan (18) to the objects with known coordinates such that it is available in a superordinate coordinate system.
d) Using the location obtained in a previous recording as a starting position for the determination of an estimated value of the relative movement of the scanner to the next location (B, C) where the next scan (20) is to be taken.
e) Automatic recording of the scan (20) taken at the next location relative to the scan (18) of a previous location.
f) Repeating steps d) and e) until the object has been surveyed, wherein a correction of the estimated value determined by means of the navigation unit (8) and a correction of the navigation unit is made on the basis of the automatic recording.

7. The method according to claim 6, wherein the determining of the basic position is performed by means of GNSS or GPS data or by means of available objects with known coordinates.

## Revendications

1. Dispositif de balayage à laser pour la mesure 3D d'objets avec un émetteur pour délivrer un rayon laser, un système déflecteur de rayon mécanique pour dévier le rayon laser de sorte que puisse se faire une mesure d'un objet 3D, avec une unité d'évaluation pour évaluer le rayon de mesure réfléchi par l'objet et un dispositif de navigation pour saisir la position du dispositif de balayage dans l'espace, dans lequel le dispositif de navigation a une unité de navigation (8) pour déterminer indépendamment du signal GNSS, en particulier du signal GPS, la position du dispositif de balayage et l'orientation du dispositif de balayage par rapport à une position de base (A) du dispositif de balayage à laser (1), dans lequel l'unité d'évaluation est étudiée pour corriger une position du dispositif de balayage estimée au moyen du dispositif de navigation sur la base d'un enregistrement automatique d'un balayage sur les objets et réaliser une correction correspondante de l'unité de navigation.

2. Dispositif de balayage à laser selon la revendication 1, dans lequel l'unité de navigation (8) contient des accéléromètres, des gyroscopes et des magnétomètres.

3. Dispositif de balayage à laser selon la revendication 2, comprenant un baromètre et/ou un récepteur de GNSS et/ou d'autres appareils d'appoint appropriés pour l'estimation de la position.

4. Dispositif de balayage à laser selon l'une quelconque des revendications précédentes, comprenant une unité d'évaluation pour l'enregistrement automatique sans cible de plusieurs balayages en fonction de la position et de l'orientation respectives du dispositif de balayage.

5. Dispositif de balayage à laser selon l'une quelconque des revendications précédentes, comprenant une mémoire pour mémoriser les données obtenues par l'unité de navigation.

6. Procédé de mesure d'un objet au moyen d'un dispositif de balayage à laser selon l'une quelconque des revendications précédentes avec les étapes suivantes :
a) détermination d'une position de base du dispositif de balayage à laser au moyen de l'unité de navigation (8) ou réglage de la position de base à [0,0,0],
b) établissement d'un premier balayage (18),
c) enregistrement de ce balayage (18) sur les objets avec des coordonnées connues, ainsi celui-ci se trouve dans un système de coordonnées d'ordre supérieur,
d) utilisation de l'emplacement obtenu lors d'un enregistrement antérieur comme position de départ pour l'identification d'une valeur d'estimation du déplacement relatif du dispositif de balayage à l'emplacement suivant (B, C) où le balayage suivant (20) doit être enregistré,
e) enregistrement automatique du balayage (20) enregistré à l'emplacement suivant par rapport au balayage (18) d'un emplacement précédent,
f) répétition des étapes d) et e) jusqu'à ce que l'objet soit mesuré, dans lequel il se produit, sur la base de l'enregistrement automatique, une correction de la valeur d'estimation identifiée au moyen de l'unité de navigation (8) et une correction de l'unité de navigation.

7. Procédé selon la revendication 6, dans lequel la détermination de la position de base est réalisée au moyen de données GNSS ou GPS ou sur la base d'objets existants ayant des coordonnées déjà connues.
